(19) Europäisches Patentamt
European Patent Office
Office européen des brevets

(11) **EP 4 761 030 A1**

(12) **EUROPEAN PATENT APPLICATION**
published in accordance with Art. 153(4) EPC

(43) Date of publication:
**17.06.2026 Bulletin 2026/25**

(21) Application number: **24890273.6**

(22) Date of filing: **30.08.2024**

(51) International Patent Classification (IPC):
**H02H 3/093** (2006.01)

(52) Cooperative Patent Classification (CPC):
**H02H 3/0935; H02H 3/006; H02H 7/18;** H02H 3/087

(86) International application number:
**PCT/CN2024/115914**

(87) International publication number:
**WO 2025/102913 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.11.2023   CN 202323116842 U
17.11.2023   CN 202311540808**

(71) Applicant: **Eve Energy Co., Ltd.
Huizhou, Guangdong 516006 (CN)**

(72) Inventor: **ZHAO, Rubang
Huizhou, Guangdong 516006 (CN)**

(74) Representative: **Nederlandsch Octrooibureau
P.O. Box 29720
2502 LS The Hague (NL)**

(54) **CIRCUIT BREAKING TRIGGER DEVICE**

(57) The present application provides a circuit cut-off triggering device including a judgment module, wherein the judgment module is configured to integrate a voltage across a shunt in a target circuit to obtain a corresponding integral voltage, and to generate a triggering signal once the integral voltage reaches a first threshold, and the triggering signal is configured to cause the target circuit to be cut off; wherein the time for the integral voltage to reach the first threshold is inversely proportional to a magnitude of the voltage across the shunt.

FIG. 1

EP 4 761 030 A1

**Description**

The present Application claims priorities to Chinese Applications No. 202323116842.7, and No. 202311540808.4 filed to China National Intellectual Property Administration on November 17, 2023, the contents of which are incorporated herein by reference in their entireties.

TECHNICAL FIELD

The present application relates to the field of battery protection technology, and in particular to a circuit cut-off triggering device.

BACKGROUND

In related technologies, current in a circuit is detected by a trigger of a Micro Controller Unit (MCU), processed through a predetermined process, and triggered to be cut off, that is, both low voltage and high voltage are triggered to be cut off after a constant time.

SUMMARY

In a high-voltage circuit, current I is usually large. In case that a time for a trigger to cut off the high-voltage circuit is defined as t, a Joule integral $I^2t$ subjected by electrical components in the high-voltage circuit before cutting off increases exponentially with an increase in the current I, so that the electrical components generate a large amount of heat before the high-voltage circuit is cut off by the trigger, which easily causes damage to the electrical components and is very dangerous. Therefore, the trigger in the related art is of poor protection under high current conditions.

Embodiments of the present application provide a circuit cut-off triggering device, including a judgment module configured to integrate a voltage across a shunt to obtain a corresponding integral voltage, and generate a triggering signal in case that the integral voltage reaches a first threshold, and the triggering signal is configured to cause a target circuit to be cut off; in which a time for the integral voltage to reach the first threshold is inversely proportional to a magnitude of a voltage across the shunt.

BENEFICIAL EFFECTS

In the embodiments of the present application, a voltage across a shunt of a target circuit is integrated by a judgment module to obtain a corresponding integral voltage, and the integral voltage is compared with a first threshold. In case that the integral voltage reaches the first threshold voltage, a triggering signal is generated to cause the target circuit to be cut off. Since a growth rate of the integral voltage is configured to be inversely proportional to a magnitude of the voltage across the shunt, the larger the voltage across the shunt, the shorter the time for the integral voltage to reach the first threshold voltage, that is, the time for the integral voltage to reach the first threshold is configured to be inversely proportional to the magnitude of the voltage across the shunt. As such, the larger the current in the target circuit, the shorter the time for cutting off the target circuit, that is, the shorter the cut-off time, therefore the technical problem in related technologies where the target circuit cannot be cut off by a trigger in time under high current conditions due to the constant cut-off time, resulting in an exponential increase in a Joule integral $I^2t$ subjected by the target circuit during a cut-off process with an increase in the current I, resulting in poor protection of the trigger, is alleviated.

BRIEF DESCRIPTION OF THE DRAWINGS

FIG. 1 is a schematic diagram of a module of a triggering device for circuit cut-off and its application scenario provided in an embodiment of the present application;

FIG. 2 is a schematic diagram of a module of a triggering device for circuit cut-off provided in an embodiment of the present application;

FIG. 3 is a schematic diagram of a module of a judgment module provided in an embodiment of the present application;

FIG. 4 is a schematic diagram of a structure of an integrating circuit provided in an embodiment of the present application;

FIG. 5 is a schematic diagram of a structure of a differential amplifying circuit provided in an embodiment of the present application;

FIG. 6 is a schematic diagram of a structure of an absolute value multiplying circuit provided in an embodiment of the present application;

FIG. 7 is a schematic diagram of a structure of a threshold judgment circuit provided in an embodiment of the present application;

FIG. 8 is a schematic diagram of a structure of a judgment triggering circuit provided in an embodiment of the present application; and

FIG. 9 is a schematic diagram of a structure of a triggering module provided in an embodiment of the present application.

Reference numerals in the accompany drawings:

100: circuit cut-off triggering device; 110: judgment module; 111: differential amplifying circuit; 112: value multiplying circuit; 113: threshold judgment circuit; 114: integrating circuit; 115: judgment triggering circuit; 120: triggering module; 130: power module;

200: battery pack;

300: load.

DETAILED DESCRIPTION

The safety of short-circuit protection depends on an $I^2t$ value in a circuit, in which I is a current in the circuit, and t is a time from sensing an excessive current to the circuit being cut off by a protection component such as a trigger. The smaller the $I^2t$ value, the less damage to an entire high-voltage circuit.

In related technologies, a current in a circuit is detected by a trigger of a Micro Controller Unit, processed through a predetermined process, and triggered to be cut off, that is, both low voltage and high voltage are triggered to be cut off after a constant time. Therefore, in related technologies, the time t for the trigger to cut off the circuit remains unchanged, and a Joule integral $I^2t$ subjected by the circuit during a cut-off process increases exponentially with an increase in the current I, resulting in the trigger in related technologies is of poor protection under high current conditions.

For example, a current in a circuit is detected by a Micro Controller Unit (MCU), and logically processed by the MCU, and once the current in the circuit reaches a threshold, a trigger is controlled to cut off the circuit. Since the detection of the current in the circuit should be logically processed by the MCU, and a logic operation time of the MCU is constant, the time for the trigger to cut off the circuit in this method is long and constant. In case that in a high-voltage circuit, the current in the high-voltage circuit is large, and the Joule integral $I^2t$ subjected by the circuit during a cut-off process increases exponentially with an increase in the current I, which eventually leads to technical problems such as damage to electrical components. Due to physical properties of a traditional fuse, the $I^2t$ value of the traditional fuse varies with the current value, and the $I^2t$ is large when the current is small.

Embodiments of the present application provide a circuit cut-off triggering device 100 to alleviate technical problems existing in related technical solutions.

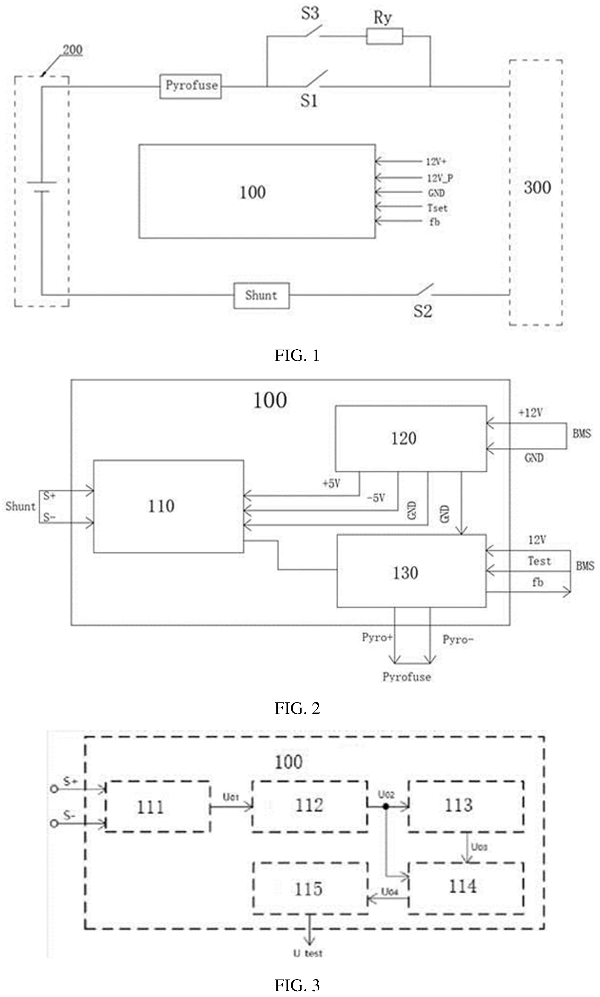

As shown in FIG. 1 to FIG. 9, the circuit cut-off triggering device 100 includes a judgment module 110. The judgment module 110 is electrically connected to a shunt Shunt of a target circuit. The judgment module 110 judges a voltage across the target circuit by collecting voltage across the shunt Shunt. The shunt Shunt is a resistor R with a specific resistance value. The judgment module 110 integrates the voltage across the shunt Shunt to obtain a corresponding integral voltage. Since the voltage across the shunt Shunt may change dynamically, the integration process is also real-time.

The voltage across the shunt Shunt determines the magnitude of the integral voltage within the corresponding time, that is, within a certain period of time, the higher the voltage across the shunt Shunt, the higher the corresponding integral voltage. Therefore, the higher the voltage across the shunt, the shorter the time for the integral voltage to reach a first threshold, that is, the time for the integral voltage to reach the first threshold is inversely proportional to the magnitude of the voltage across the shunt Shunt.

Once the integral voltage reaches the first threshold, the circuit cut-off triggering device 100 generates a triggering signal, and the triggering signal drives a protection device Pyrofuse in the target circuit to perform a protection action, such as to cut off the target circuit.

The voltage across the shunt Shunt is U=IR, in which I is a current flowing through the shunt Shunt, and R is a resistance of the shunt. Thus, a Joule integral subjected by the target circuit is $I^2t$, in which t is a time for the circuit cut-off triggering device 100 to sense the voltage across the shunt Shunt and trigger the protection device Pyrofuse to cut off the target circuit.

Based on a scheme of the circuit cut-off triggering device 100 in this embodiment, the larger the voltage across the shunt Shunt, the shorter the time for the integral voltage generated by the judgment module 110 to reach the first threshold. In case that a value of the first threshold is preset, the larger the voltage across the target circuit, that is, the larger the current (I=U/R), the shorter the time t for the judgment module 110 to generate a triggering signal to trigger the protection device Pyrofuse to cut off the circuit.

Based on the scheme of the circuit cut-off triggering device 100 in this embodiment, the Joule integral expected to be subjected by the target circuit during a cut-off process is set as the first threshold. Thus, the Joule integral subjected by the target circuit during the cut-off process is of a constant value. A time for cutting off the target circuit under large current conditions is less than a time for cutting off the target circuit under small current conditions. The Joule integral subjected by the target circuit during the cut-off process under large current conditions is the same as the Joule integral subjected by the target circuit during the cut-off process under small current conditions, so that the Joule integral $I^2t$ subjected by the target circuit would not increase with the increase in the current across the shunt Shunt.

In this embodiment, a voltage across a shunt Shunt of a target circuit is integrated by a judgment module 110 to obtain a corresponding integral voltage. Once the integral voltage reaches a first threshold, the target circuit is cut off, and the time for the integral voltage to reach the first threshold is configured to be inversely proportional to the value of the voltage across the shunt Shunt, so that the larger the current in the target circuit, the shorter the time for cutting off the target circuit, therefore the technical problem in related technologies where a Joule integral I²t subjected by the target circuit during a cut-off process exponentially increases with an increase in a current I due to the constant cut-off time, and the protection device is of poor protection under large current conditions, is alleviated.

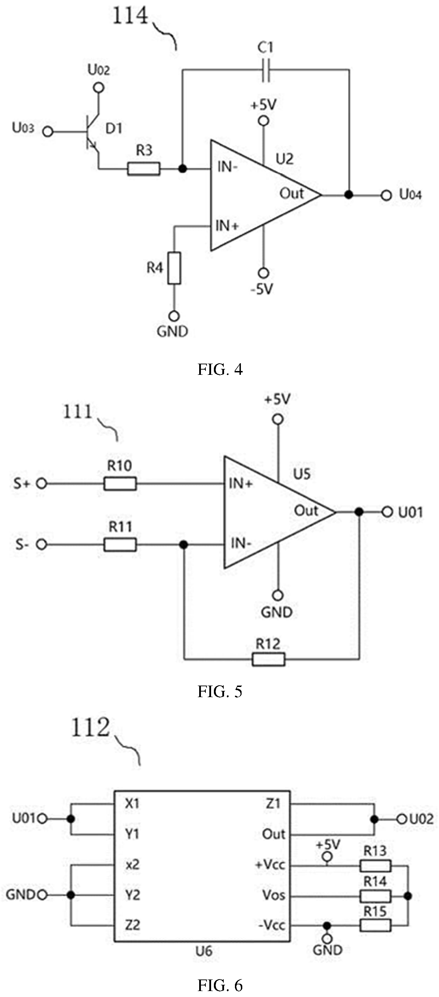

As shown in FIG. 3 and FIG. 4, in some embodiments, the judgment module 110 includes an integrating circuit 114. The integrating circuit 114 is electrically connected to the shunt Shunt to receive the voltage across the shunt Shunt. The integrating circuit 114 integrates the voltage across the shunt Shunt to obtain an integral voltage.

For example, the integrating circuit 114 includes a first operational amplifier U2, a first resistor R3, a second resistor R4, and a first capacitor C1. An inverting input terminal of the first operational amplifier U2 receives the voltage across the shunt Shunt through the first resistor R3. A non-inverting input terminal of the first operational amplifier U2 is electrically connected to a first power line through the second resistor R4. An output terminal of the first operational amplifier U2 is configured to output the integral voltage. One terminal of the first capacitor C1 is electrically connected to the inverting input terminal of the first operational amplifier U2, and another terminal of the first capacitor C1 is electrically connected to the output terminal of the first operational amplifier U2.

It can be understood that the first operational amplifier U2, the first resistor R3, and the second resistor R4 constitute the integrating circuit 114. A voltage at the output terminal of the first operational amplifier U2 per unit time is determined by a voltage input into the inverting input terminal of the first operational amplifier U2. The larger the voltage at the inverting input terminal of the first operational amplifier U2, the larger the voltage at the output terminal of the first operational amplifier U2 per unit time.

As shown in FIG. 3, FIG. 5, and FIG. 6, in an embodiment, the judgment module 110 further includes an absolute value multiplying circuit 112 and a differential amplifying circuit 111. The absolute value multiplying circuit 112 is electrically connected between the differential amplifying circuit 111 and the first resistor R3. The absolute value multiplying circuit 112 is configured to multiply the voltage on the differential amplifying circuit 111 to obtain a first operational voltage. The integral voltage is obtained based on the first operational voltage through the first operational amplifier U2.

The differential amplifying circuit 111 is electrically connected between the shunt Shunt and the absolute value multiplying circuit 112. The differential amplifying circuit 111 is configured to amplify the voltage across the shunt Shunt to obtain a second operational voltage, and output the second operational voltage to the absolute value multiplying circuit 112.

For example, the differential amplifying circuit 111 includes a fourth operational amplifier U5, an eighth resistor R10, a ninth resistor R11, and a tenth resistor R12. A non-inverting input terminal of the fourth operational amplifier U5 is electrically connected to one terminal of the shunt Shunt through the eighth resistor R10, and an inverting input terminal of the fourth operational amplifier U5 is electrically connected to another terminal of the shunt Shunt through the ninth resistor R11. The inverting input terminal of the fourth operational amplifier U5 is electrically connected to an output terminal of the fourth operational amplifier U5 through the tenth resistor R12.

It can be understood that the fourth operational amplifier U5 performs differential amplification on the voltage across the shunt Shunt to avoid the situation where the voltage across the shunt Shunt is too low to provide a result of the operation on the voltage by the absolute value multiplying circuit 112 to the integrating circuit 114 for operation.

The absolute value multiplying circuit 112 includes a multiplying module U6, an input terminal of the multiplying module U6 is electrically connected to the output terminal of the fourth operational amplifier U5, an output terminal of the multiplying module U6 is electrically connected to the inverting input terminal of the first operational amplifier U2, and the multiplying module U6 multiplies the second operational voltage to obtain the first operational voltage.

For example, the multiplying module U6 is implemented through a multiplying chip, such as a multiplying chip of model MPY100 of Texas Instruments. An input terminal X1 of the multiplying chip is electrically connected to the output terminal of the fourth operational amplifier U5, and an output terminal OUT of the multiplying chip is electrically connected to the inverting input terminal of the first operational amplifier U2. A first voltage pin +vcc, a second voltage pin vos, and a third voltage pin -vcc of the multiplying chip are grounded through the resistor R13, the resistor R14, and the resistor R15, respectively.

It can be understood that other circuits with multiplication functions are used to implement functions described above.

As shown in FIG. 3, FIG. 4 and FIG. 7, in some embodiments, the integrating circuit 114 further includes a first transistor D1. An input terminal of the first transistor D1 is electrically connected to an output terminal of the absolute value multiplying circuit 112, and an output terminal of the first transistor D1 is electrically connected to the first resistor R3. The judgment module 110 further includes a threshold judgment circuit 113, an input terminal of the threshold judgment circuit 113 is electrically connected to the output terminal of the absolute value multiplying circuit 112, an output terminal of the threshold judgment circuit 113 is electrically connected to a control terminal of the first transistor D1. Once the first operational voltage is larger than a second threshold, the threshold judgment circuit 113 controls the first transistor D1 to be turned on.

For example, the threshold judgment circuit 113 includes a fifth operational amplifier U1, an eleventh resistor R1, and a twelfth resistor R2. One terminal of the eleventh resistor R1 is electrically connected to a second power line, another terminal of the eleventh resistor R1 is electrically connected to one terminal of the twelfth resistor R2, and another terminal of the twelfth resistor R2 is electrically connected to the first power line. An inverting input terminal of the fifth operational amplifier U1 is electrically connected to a common terminal between the eleventh resistor R1 and the twelfth resistor R2, and a non-inverting input terminal of the fifth operational amplifier U1 is electrically connected to the output terminal OUT of the multiplying chip.

It can be understood that the fifth operational amplifier U1, the eleventh resistor R1, and the twelfth resistor R2 constitute a comparator circuit, and the first operational voltage output by the multiplying chip is compared with a voltage across the twelfth resistor R2, that is, the voltage across the twelfth resistor R2 is the second threshold. The second threshold is adjusted by adjusting resistance values of the eleventh resistor R1 and the twelfth resistor R2.

Once the first operational voltage output by the multiplying chip is larger than the voltage across the twelfth resistor R2, the fifth operational amplifier U1 outputs a first control voltage, the first control voltage causes the first transistor D1 to be turned on, the first operational voltage output by the multiplying chip is input to the inverting input terminal of the first operational amplifier U2, and the first operational amplifier U2 operates on the first operational voltage to obtain the integral voltage.

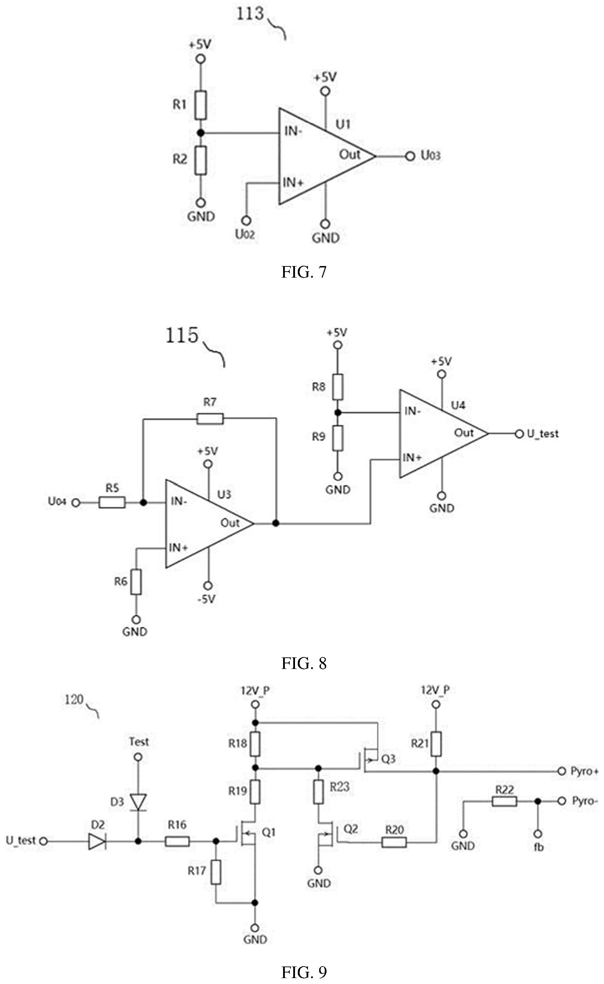

As shown in FIG. 8, in an embodiment, the judgment module 110 further includes a judgment triggering circuit 115. The judgment triggering circuit 115 is electrically connected to an output terminal of the integrating circuit 114. Once the integral voltage reaches a first threshold, the judgment triggering circuit 115 generates a triggering signal.

For example, the judgment triggering circuit 115 includes a second operational amplifier U3, a third operational amplifier U4, a third resistor R5, a fourth resistor R6, a fifth resistor R7, a sixth resistor R8, and a seventh resistor R9.

One terminal of the sixth resistor R8 is electrically connected to the second power line, another terminal of the sixth resistor R8 is electrically connected to one terminal of the seventh resistor R9, and another terminal of the seventh resistor R9 is electrically connected to the first power line.

An inverting input terminal of the second operational amplifier U3 is electrically connected to the output terminal of the integrating circuit 114 through the third resistor R5. A non-inverting input terminal of the second operational amplifier U3 is electrically connected to the first power line through the fourth resistor R6. The inverting input terminal of the second operational amplifier U3 is electrically connected to an output terminal of the second operational amplifier U3 through the fifth resistor R7.

A non-inverting input terminal of the third operational amplifier U4 is electrically connected to the output terminal of the second operational amplifier U3, an inverting input terminal of the third operational amplifier U4 is electrically connected to a common terminal between the sixth resistor R8 and the seventh resistor R9, and an output terminal of the third operational amplifier U4 is configured to output a triggering signal.

It can be understood that the second operational amplifier U3, the third resistor R5, the fourth resistor R6, and the fifth resistor constitute a reverse proportional amplifying circuit. The second operator reversely amplifies the integral voltage to obtain a third operational voltage and outputs the third operational voltage to the non-inverting input terminal of the third operational amplifier U4.

The third operational amplifier U4, the sixth resistor R8, and the seventh resistor R9 constitute a comparator. The third operational voltage is compared with a voltage across the seventh resistor R9, that is, the voltage across the seventh resistor R9 is the first threshold. The first threshold is adjusted by adjusting resistance values of the sixth resistor R8 and the seventh resistor R9. Once the third operational voltage is larger than the first threshold, the third operational amplifier U4 outputs a triggering signal.

Based on the scheme of the circuit cut-off triggering device 100 in this embodiment, the Joule integral expected to be subjected by the target circuit during a cut-off process is set as the first threshold. Thus, the Joule integral subjected by the target circuit during the cut-off process is a constant value. A time for cutting off the target circuit under large current conditions is less than a time for cutting off the target circuit under small current conditions. The Joule integral subjected by the target circuit during the cut-off process under large current conditions is the same as the Joule integral subjected by the target circuit during the cut-off process under small current conditions, so that the Joule integral $I^2t$ subjected by the target circuit would not increase with the increase in the current across the shunt Shunt.

For example, please refer to FIG. 3 to FIG. 9, the differential amplifying circuit 111 amplifies the voltage $U_0$ across the shunt Shunt and outputs a second operational voltage $U_{01}=\beta*U_0=\beta*I_0*R_0$ ($\beta$: differential amplification factor), in which $\beta$ is the differential amplification factor of the fourth operational amplifier U5, $I_0$ is the current flowing through the shunt Shunt, and $R_0$ is the voltage across the shunt Shunt.

The absolute value multiplying circuit 112 multiplies the second operational voltage $U_{01}$ to obtain a first operational voltage $U_{02}=U_{01}^2=I_0^2*(\beta*R_0)^2$.

The threshold judgment circuit 113 compares the first operational voltage $U_{02}$ with a second threshold $U_a$. It can be understood that comparing the first operational voltage $U_{02}$ with the second threshold $U_a$ is actually

comparing the current $I_0$ passing through the shunt Shunt with a current threshold $I_a$ ($I_a$ is the corresponding current across the shunt Shunt in case that the voltage across the shunt Shunt reaches the second threshold).

Once the first operational voltage $U_{02}$ is larger than the second threshold $U_a$, the threshold judgment circuit 113 outputs a control voltage $U_{03}$ to cause the first transistor D1 to be turned on, and the first operational voltage $U_{02}$ is input to the integrating circuit 114. The integrating circuit 114 integrates $U_{02}$ and outputs an integral voltage

$$U_{04}= -\frac{1}{R_3*C_1}\int_0^t U_{02}(t)dt = -\frac{(\beta*R_0)^2}{R_3*C_1}*I_0^2t$$

to the judgment triggering circuit 115.

The second operational amplifier U3 in the judgment triggering circuit 115 reversely amplifies the integral voltage $U_{04}$ to obtain a third operational voltage

$$U_b=-\frac{R7}{R5}U_{04} = \frac{R_7*(\beta*R_0)^2}{R_5*R_3*C1}*I_0^2t$$, and sends the

third operational voltage $U_b$ to the third operational amplifier U4. The third operational amplifier U4 compares the third operational voltage $U_b$ with the first threshold

$$U_c=\frac{R7*(\beta*R0)^2}{R5*R3*C1}*I^2t$$, in which $I^2t$ is the Joule integral expected to be subjected by the target circuit during a cut-off process. Once the third operational voltage $U_b$ is larger than the first threshold $U_c$, the third operational amplifier U4 outputs a triggering signal $U_{\_test}$ to trigger the protection device Pyrofuse to cut off the target circuit.

It can be understood that a coefficient part

$$\frac{R7*(\beta*R0)^2}{R5*R3*C1}$$ of the third operational voltage $U_b$ is configured to be equal to the coefficient part of the first threshold $U_c$, and a comparison between the third operational voltage $U_b$ and the first threshold $U_c$ is regarded as a comparison between $I_0^2t$ and $I^2t$. Therefore, the Joule integral $I^2t$ expected to be subjected by the target circuit during a cut-off process is configured as the first threshold, so that in case that the first threshold is constant, the circuit cut-off triggering device 100 ensures that the Joule integral subjected by the target circuit during a cut-off process under large current conditions is the same as the Joule integral subjected by the target circuit during a cut-off process under large current conditions.

As shown in FIG. 2 and FIG. 9, in an embodiment, the circuit cut-off triggering device 100 further includes a triggering module 120. The triggering module 120 is electrically connected to the judgment module 110. The triggering module 120 is configured to drive a protection device Pyrofuse in the target circuit based on a triggering signal. Once the protection device Pyrofuse is driven, the target circuit is cut off.

For example, the triggering module 120 includes a second transistor Q1, a third transistor Q3, a thirteenth resistor R16, a fourteenth resistor R17, a fifteenth resistor R19, and a sixteenth resistor R18.

A control terminal of the second transistor Q1 is electrically connected to an output terminal of the judgment module 110, and an input terminal of the second transistor Q1 is electrically connected to the first power line.

A control terminal of the third transistor Q3 is electrically connected to an output terminal of the second transistor Q1, an input terminal of the third transistor Q3 is electrically connected to a third power line, an output terminal of the third transistor Q3 is electrically connected to a first control terminal of the protection device Pyrofuse, and a second control terminal of the protection device Pyrofuse is grounded through a second control terminal resistor R22.

Once the second transistor Q1 is turned on, a voltage on the first power line pulls down a voltage at the control terminal of the third transistor Q3 to cause the third transistor Q3 to be turned on. The third transistor Q3 outputs a voltage on the third power line to a first control terminal of the protection device Pyrofuse to drive the protection device Pyrofuse to cut off the target circuit.

It can be understood that a thirteenth resistor R16 is arranged between the control terminal of the second transistor Q1 and the output terminal of the judgment module 110, and the control terminal of the second transistor Q1 is electrically connected to the first power line through the fourteenth resistor R17 to prevent damage to the second transistor Q1 caused by an excessive voltage across the triggering signal.

A fifteenth resistor R19 is arranged between the control terminal of the third transistor Q3 and the output terminal of the second transistor Q1, and the control terminal of the third transistor Q3 is electrically connected to the third power line through a sixteenth resistor R18.

In some embodiments, the triggering module 120 further includes a maintaining unit, and the maintaining unit includes a fourth transistor Q2, a seventeenth resistor R21, an eighteenth resistor R20, and a nineteenth resistor R23.

One terminal of the seventeenth resistor R21 is electrically connected to the output terminal of the third transistor Q3, another terminal of the seventeenth resistor is electrically connected to the third power line, a control terminal of the fourth transistor Q2 is electrically connected to the output terminal of the third transistor Q3 through the eighteenth resistor R20, an input terminal of the fourth transistor Q2 is electrically connected to the first power line, and an output terminal of the fourth transistor Q2 is electrically connected to the control terminal of the third transistor Q3 through the nineteenth resistor R23.

It can be understood that once the second transistor Q1 is turned on to pull down a voltage at the control terminal of the third transistor Q3, the third transistor Q3 is turned on, a voltage on the third power line is transmitted to the control terminal of the fourth transistor Q2, so that the fourth transistor Q2 is turned on to further pull down the voltage at the control terminal of the third transistor Q3. Thus, the third transistor Q3 is kept to be turned on to continuously drive the protection device Pyrofuse to cut off the target circuit, and the safety of the target circuit is improved. It can be understood that resistance values of the seventeenth resistor R21 and the eighteenth resistor R20 are adjusted to prevent the fourth transistor Q2 from being turned on in case that the third transistor Q3 is not yet turned on.

For example, the first power line provides a low potential voltage, such as ground, the second power line provides a +5V voltage, and the third power line provides a 12V voltage.

In some embodiments, the circuit cut-off triggering device 100 further includes a power module 130, and the power module is configured to provide corresponding voltages to the first power line and the second power line. For example, the power module 130 is implemented by a power management chip, and the power management chip converts an external voltage such as a voltage output by the power module in a BMS (Battery Management System) of a battery pack into corresponding voltages on the first power line and the second power line. For example, the corresponding voltage on the third power line is directly provided by the power module in the BMS.

For example, the circuit cut-off triggering device 100 should be arranged in a circuit between the battery pack 200 and the load 300, and the target circuit is a main circuit of the battery pack. The main circuit of the battery pack 200 includes a protection device Pyrofuse, a shunt Shunt, a positive relay S1, a negative relay S2, a pre-charge relay S3, and a pre-charge resistor Ry. The protection device Pyrofuse and the positive relay S1 are connected in series between a positive electrode of the battery pack and a first input terminal of the load, and the shunt Shunt and the negative relay S2 are connected in series between a negative electrode of the battery pack and a second input terminal of the load. The pre-charge relay S3 and the pre-charge resistor Ry are connected in series, and connected in parallel with the positive relay S1.

In an embodiment, the control terminal of the second transistor Q1 is further electrically connected to the BMS, and the BMS sends an active triggering signal Test to cause the second transistor Q1 to be turned on.

In order to prevent the triggering signal sent by the judgment triggering circuit 115 and the active triggering signal sent by the BMS from influencing each other, a diode is arranged between the output terminal of the judgment triggering circuit 115 and the control terminal of the second transistor Q1, as well as between the BMS and the control terminal of the second transistor Q1.

For example, a first diode D2 is electrically connected between the output terminal of the third operational amplifier U4 and the control terminal of the second transistor Q1, an anode electrode of the first diode D2 is electrically connected to the output terminal of the third operational amplifier U4, and a cathode electrode of the first diode D2 is electrically connected to the control terminal of the second transistor Q1. A control signal output terminal of the BMS is electrically connected to the anode electrode of the second diode D3, and the cathode electrode of the second diode D3 is electrically connected to the control terminal of the second transistor Q1.

It can be understood that in this embodiment of the present application, the control signal of the circuit cut-off triggering device 100 and the control signal of the BMS are configured to not conflict with each other, and both to drive the protection device Pyrofuse and control the target circuit to be cut off.

In an embodiment, the BMS is electrically connected to the second control terminal of the protection device Pyrofuse through a feedback terminal to detect a triggering state of the protection device Pyrofuse. For example, the feedback terminal of the BMS is electrically connected to the second control terminal of the protection device Pyrofuse and a terminal of the resistor 22 close to the second control terminal. The seventeenth resistor R21, the first control terminal of the protection device Pyrofuse, and the second control terminal resistor R22 constitute a state detection circuit. Once the protection device Pyrofuse is working, the first control terminal and the second control terminal of the protection device Pyrofuse are in an off state, and the feedback terminal of the BMS receives a low level, so that the BMS monitors a working state of the protection device Pyrofuse based on a voltage at the feedback terminal.

**Claims**

1. A circuit cut-off triggering device (100), comprising

   a judgment module (110), the judgment module (110) being configured to integrate a voltage across a shunt to obtain a corresponding integral voltage, and generate a triggering signal once the integral voltage reaches a first threshold, and the triggering signal being configured to cause a target circuit to be cut off;
   wherein a time for the integral voltage to reach the first threshold is inversely proportional to a magnitude of the voltage across the shunt.

2. The circuit cut-off triggering device (100) of claim 1, wherein the judgment module (110) comprises:
   an integrating circuit, the integrating circuit is electrically connected to the shunt, and the integrating circuit is configured to integrate the voltage across the shunt to obtain the integral voltage.

3. The circuit cut-off triggering device (100) of claim 2, wherein the integrating circuit comprises a first operational amplifier, a first resistor, a second resistor, and a first capacitor;
   an inverting input terminal of the first operational amplifier is configured to receive the voltage across the shunt through the first resistor, a non-inverting input terminal of the first operational amplifier is electrically connected to a first power line through the second resistor, an output terminal of the first operational amplifier is configured to output the integral voltage, one terminal of the first capacitor is electrically connected to the inverting input terminal of the first operational amplifier, and another terminal of the first capacitor is electrically connected to the output terminal of the first operational amplifier.

4. The circuit cut-off triggering device (100) of claim 3, wherein the judgment module (110) further comprises an absolute value multiplying circuit (112); the absolute value multiplying circuit (112) is electrically connected between the shunt and the first resistor, the absolute value multiplying circuit (112) is configured to multiply the voltage across the shunt to obtain a first operational voltage, and the first operational amplifier is configured to obtain the integral voltage based on the first operational voltage.

5. The circuit cut-off triggering device (100) of claim 4, wherein the judgment module (110) further comprises a differential amplifying circuit (111); the differential amplifying circuit (111) is electrically connected between the shunt and the absolute value multiplying circuit (112), and the differential amplifying circuit (111) is configured to amplify the voltage across the shunt and output to the absolute value multiplying circuit (112).

6. The circuit cut-off triggering device (100) of claim 5, wherein the differential amplifying circuit (111) comprises a fourth operational amplifier, an eighth resistor, a ninth resistor, and a tenth resistor; a non-inverting input terminal of the fourth operational amplifier is electrically connected to one terminal of the shunt through the eighth resistor, an inverting input terminal of the fourth operational amplifier is electrically connected to another terminal of the shunt through the ninth resistor, and an output terminal of the fourth operational amplifier is electrically connected to the absolute value multiplying circuit (112), wherein the inverting input terminal of the fourth operational amplifier is electrically connected to the output terminal of the fourth operational amplifier through the tenth resistor.

7. The circuit cut-off triggering device (100) of claim 6, wherein the absolute value multiplying circuit (112) comprises a multiplying module; an input terminal of the multiplying module is electrically connected to the output terminal of the fourth operational amplifier, an output terminal of the multiplying module is electrically connected to the inverting input terminal of the first operational amplifier, the differential amplifying circuit is configured to amplify the voltage across the shunt to obtain a second operational voltage, and the multiplying module is configured to multiply the second operational voltage to obtain the first operational voltage.

8. The circuit cut-off triggering device (100) of claim 4, wherein the integrating circuit (114) further comprises a first transistor; an input terminal of the first transistor is electrically connected to an output terminal of the absolute value multiplying circuit (112), and an output terminal of the first transistor is electrically connected to the first resistor;
the judgment module (110) further comprises a threshold judgment circuit (113); an input terminal of the threshold judgment circuit (113) is electrically connected to the output terminal of the absolute value multiplying circuit (112), an output terminal of the threshold judgment circuit (113) is electrically connected to a control terminal of the first transistor, and the threshold judgment circuit (113) is configured to control the first transistor to be turned on once the first operational voltage is larger than a second threshold.

9. The circuit cut-off triggering device (100) of claim 8, wherein the threshold judgment circuit (113) comprises a fifth operational amplifier, an eleventh resistor, and a twelfth resistor; one terminal of the eleventh resistor is electrically connected to a second power line, another terminal of the eleventh resistor is electrically connected to one terminal of the twelfth resistor, another terminal of the twelfth resistor is electrically connected to the first power line, an inverting input terminal of the fifth operational amplifier is electrically connected to a common terminal between the eleventh resistor and the twelfth resistor, a non-inverting input terminal of the fifth operational amplifier is electrically connected to an output terminal of the multiplying module, and an output terminal of the fifth operational amplifier is electrically connected to the control terminal of the first transistor.

10. The circuit cut-off triggering device (100) of claim 2, wherein the judgment module (110) further comprises a judgment triggering circuit (115); the judgment triggering circuit (115) is electrically connected to an output terminal of the integrating circuit (114), and the judgment triggering circuit (115) is configured to generate the triggering signal once the integral voltage reaches the first threshold.

11. The circuit cut-off triggering device (100) of claim 10, wherein the judgment triggering circuit (115) comprises a second operational amplifier, a third operational amplifier, a third resistor, a fourth resistor, a fifth resistor, a sixth resistor, and a seventh resistor;

an inverting input terminal of the second operational amplifier is electrically connected to the output terminal of the integrating circuit through the third resistor, a non-inverting input terminal of the second operational amplifier is electrically connected to a first power line through the fourth resistor, and the inverting input terminal of the second operational amplifier is electrically connected to an output terminal of the second operational amplifier through the fifth resistor;

one terminal of the sixth resistor is electrically connected to a second power line, another terminal of the sixth resistor is electrically connected to one terminal of the seventh resistor, and another terminal of the seventh resistor is electrically connected to the first power line;

a non-inverting input terminal of the third operational amplifier is electrically connected to the output terminal of the second operational amplifier, an inverting input terminal of the third operational amplifier is electrically connected to a common terminal between the sixth resistor and the seventh resistor, and an output terminal of the third operational amplifier is configured to output the triggering signal.

12. The circuit cut-off triggering device (100) of any one of claims 1 to 11, further comprising a triggering module (120), wherein the triggering module (120) is electrically connected to the judgment module (110), and the triggering module (120) is configured to drive a protection device in the target circuit based on a triggering signal, once the protection device is driven, the target circuit is cut off.

13. The circuit cut-off triggering device (100) of claim 12, wherein the triggering module (120) comprises:

a second transistor, wherein a control terminal of the second transistor is electrically connected to an output terminal of the judgment module (110), and an input terminal of the second transistor is electrically connected to a first power line; and

a third transistor, wherein a control terminal of the third transistor is electrically connected to an output terminal of the second transistor, an input terminal of the third transistor is electrically connected to a second power line, and an output terminal of the third transistor is electrically connected to a control terminal of a protection device.

14. The circuit cut-off triggering device (100) of claim 13, further comprising a power module (130), wherein the power module (130) is configured to provide corresponding voltages for the first power line and the second power line.

15. The circuit cut-off triggering device (100) of claim 13, wherein the control terminal of the second transistor is electrically connected to a battery management system (BMS), and the BMS configured to send an active triggering signal to cause the second transistor to be turned on.

16. The circuit cut-off triggering device (100) of claim 15, wherein a feedback terminal of the BMS is electrically connected to a second control terminal of the protection device, and configured to monitor a working state of the protection device based on a voltage at the feedback terminal.

EP 4 761 030 A1

FIG. 1

FIG. 2

FIG. 3

114

FIG. 4

111

FIG. 5

112

FIG. 6

FIG. 7

FIG. 8

FIG. 9

## INTERNATIONAL SEARCH REPORT

| International application No. |
|---|
| **PCT/CN2024/115914** |

| A. | CLASSIFICATION OF SUBJECT MATTER |
|---|---|
| | H02H3/093(2006.01)i |

According to International Patent Classification (IPC) or to both national classification and IPC

| B. | FIELDS SEARCHED |
|---|---|

Minimum documentation searched (classification system followed by classification symbols)

IPC: H02H

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 分流器, 积分, 电压, 阈值, 参考值, 定值, 边界值, 比较器, 运算放大器, 运放, 触发, 中断, 切断, 分断, 断开, 断路, 绝对值, 晶体管, diverter, integra+, voltage, threshold value, reference value, set value, boundary value, comparator, operational amplifier, open, absolute value, transistor

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117526230 A (EVE ENERGY CO., LTD.) 06 February 2024 (2024-02-06) claims 1-10, and description, paragraphs 0001-0084 | 1-16 |
| Y | CN 112753147 A (SIEMENS AG) 04 May 2021 (2021-05-04) description, paragraphs 0001-0096, and figures 1-9 | 1-3, 10, 12 |
| Y | CN 115698731 A (LIMATECH) 03 February 2023 (2023-02-03) description, paragraphs 0001-0216, and figures 1-9 | 1-3, 10, 12 |
| A | CN 115867816 A (LIMATECH) 28 March 2023 (2023-03-28) entire document | 1-16 |
| A | US 2015326115 A1 (BOE TECHNOLOGY GROUP CO., LTD. et al.) 12 November 2015 (2015-11-12) entire document | 1-16 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 November 2024** | **12 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/115914**

| Patent document cited in search report | | | Publication date (day/month/year) | Patent family member(s) | | | Publication date (day/month/year) |
|---|---|---|---|---|---|---|---|
| CN | 117526230 | A | 06 February 2024 | None | | | |
| CN | 112753147 | A | 04 May 2021 | None | | | |
| CN | 115698731 | A | 03 February 2023 | SA | 523442269 | B1 | 10 May 2024 |
| | | | | WO | 2022023204 | A1 | 03 February 2022 |
| | | | | BR | 112022025906 | A2 | 07 February 2023 |
| | | | | CA | 3184649 | A1 | 03 February 2022 |
| | | | | IL | 299430 | A | 01 February 2023 |
| | | | | EP | 4189406 | A1 | 07 June 2023 |
| | | | | EP | 4189406 | B1 | 04 September 2024 |
| | | | | FR | 3112861 | A1 | 28 January 2022 |
| | | | | FR | 3112861 | B1 | 05 August 2022 |
| | | | | KR | 20230041663 | A | 24 March 2023 |
| | | | | JP | 2023535368 | A | 17 August 2023 |
| | | | | AU | 2021318740 | A1 | 19 January 2023 |
| | | | | US | 2024297512 | A1 | 05 September 2024 |
| CN | 115867816 | A | 28 March 2023 | FR | 3112862 | A1 | 28 January 2022 |
| | | | | FR | 3112862 | B1 | 25 November 2022 |
| | | | | WO | 2022023203 | A1 | 03 February 2022 |
| | | | | WO | 2022023203 | A9 | 17 November 2022 |
| | | | | JP | 2023535367 | A | 17 August 2023 |
| | | | | EP | 4189411 | A1 | 07 June 2023 |
| | | | | US | 2023336008 | A1 | 19 October 2023 |
| | | | | CA | 3184637 | A1 | 03 February 2022 |
| US | 2015326115 | A1 | 12 November 2015 | US | 9263943 | B2 | 16 February 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202323116842
- CN 202311540808